# EUROPEAN PATENT SPECIFICATION

(11) **EP 2 709 375 B1**
(45) Date of publication and mention of the grant of the patent: **13.11.2019**
(21) Application number: 11865380.7
(22) Date of filing: 21.10.2011
(51) Int. Cl.: H04Q 11/00, H04J 3/16, H04J 3/06

(54) **DATA MAPPING METHOD AND SYSTEM FOR OPTICAL PATH TRANSPORT UNIT**
DATENMAPPINGVERFAHREN UND SYSTEM FÜR STRAHLENGANGTRANSPORTEINHEIT
PROCÉDÉ ET SYSTÈME DE MAPPAGE DE DONNÉES POUR UNITÉ DE TRANSPORT OPTIQUE

(30) Priority: 09.05.2011 CN 201110118557
(43) Date of publication of application: 19.03.2014
(73) Proprietor: ZTE Corporation, Shenzhen, Guangdong 518057 (CN)
(72) Inventor: ZHONG, Changlong, Shenzhen Guangdong 518057 (CN)
(74) Representative: Aipex B.V.
(86) International application number: PCT/CN2011/081138
(87) International publication number: WO 2012/151856

(56) References cited:
- EP-A1- 1 965 528
- EP-A2- 2 159 943
- CN-A- 1 790 993
- CN-A- 101 378 399
- CN-A- 101 729 188
- CN-A- 102 186 127
- US-A1- 2010 303 464

## Description

### TECHNICAL FIELD

The disclosure relates to the technical field of an Optical Transport Network (OTN), in particular to a data mapping method and a data mapping system for an Optical channel Transport Unit-k (OTUk).

### BACKGROUND

An OTN is a transport network for transporting data on an optical layer based on a Wavelength Division Multiplexing (WDM) technique and is also the next generation backbone transport network. It is a new generation digital and optical transport system specified at the proposal of the International Telecommunication Union-Telecommunication Standards Sector (ITU-T), such as G.872, G.709 and G.798. It aims to solve the problems of poor scheduling, networking and protection capability of non-wavelength/sub-wavelength service of the conventional WDM network.

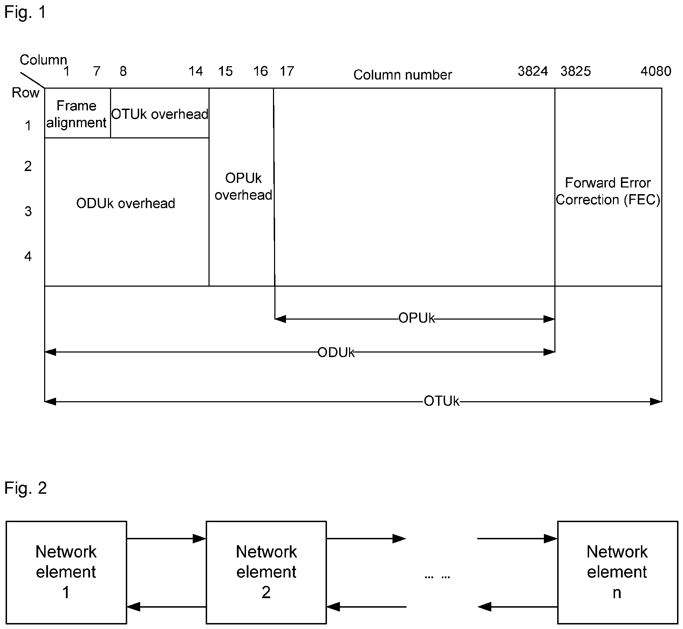

At present, four services are defined in the OTN in terms of speed level, which are OTU1, OTU2, OTU3 and OTU4 respectively. As shown, Fig. 1 is a diagram showing a frame structure of an OTUk. The signal of the OTUk is in a format of 4 rows x 4080 columns (multiplying 4 rows and 4080 columns); the signal of an Optical channel Data Unit-k (ODUk) born by the signal of the OTUk is in a format of 4 rows x 3824 columns; and the signal of an Optical channel Payload Unit-k (OPUk) born by the signal of the ODUk is in a format of 4 rows x 3808 columns.

Document EP 1965528 A1 discloses an optical transmission system for performing frequency synchronization even with a client signal with low frequency accuracy and for transmitting thereof by accommodating/multiplexing without causing a bit slip, in which it has been disclosed that an optical transmitter detects the FIFO capacity for transition from the client side clock to the transmission path side clock by a FIFO usage determining section, and the stuffing is corrected by a JC amount correction section and an error from the clock frequency difference detection is absorbed; the optical transmitter comprises a circuit for detecting the clock frequency difference with frequencies.

Document EP 2159943 A2 discloses a frame generating device includes an inserting portion and an accommodating portion. The inserting portion inserts a first fixed stuff byte and a second fixed stuff byte into a payload area of an OTU frame, the first fixed stuff byte being of (9 + 10n ("n" is zero or a given positive integer)) * 4 rows, the second fixed stuff byte being of a given byte * 4 rows, the given byte being equal to zero or more and being equal to (24 - 10n) or more. The accommodating portion accommodates Ethernet signal in the payload area other than the first fixed stuff byte and the second fixed stuff byte.

Document US 2010/303464 A1 discloses a method, a system, and a device for transmitting data in an OTN are disclosed herein. The method for transmitting data in an OTN includes: mapping the at least one pair of ODUO's to an ODTU to form an ODTUvkt, wherein k is greater than or equal to 1, t is 2 or 3, and an external structure of the ODTUvkt is the same as an external structure of an ODTUkt; and mapping the ODTUvkt to timeslot i and timeslot i+n of a 1.25 G ODUt, indicating the type of at least one pair of ODUO's carried in timeslot i to be ODUk, and transmitting the ODUk to a destination node.

Fig. 2 shows interconnections of optical ports on each network element in an OTN. The interconnection of each network element in the OTN is subjected to asynchronous clock processing so that the clock performance of the system may be damaged more or less through each network element; and if the number of the optical ports cascaded reaches a certain value, a jitter index will be out of the required range, resulting in the significant increase of error rate and failure in communications. That is to say, the number of the optical ports cascaded is limited, but will definitely increase with the increase of the network scale. Therefore, with an increasing number of optical ports cascaded, how to limit the increase of jitter to ensure normal communications in the OTN is a problem to be solved now.

### SUMMARY

In view of this, the main purpose of the disclosure is to provide a data mapping method and a data mapping system for an OTUk, in order to limit the increase of jitter to ensure normal communications in an OTN with an increasing number of optical ports cascaded.

To achieve the purpose above, the technical scheme of the disclosure is implemented as follows.

The disclosure provides a data mapping method for an OTUk according to claim 1.

The method may further include: generating a processing clock for a whole system, and sending the processing clock to each module.

The method may further include: when the valid signal for the OTUk data is acquired and the data storage state of the data storage FIFO module is not full, generating, by the OTUk writing control module, the writing control signal for the OTUk data, and writing the OTUk data to the data storage FIFO module.

The method may further include: outputting, by the OTUk reading control module, the reading control signal for the OTUk data according to the acquired OTUku frame header information when the data storage state of the data storage FIFO module is not null.

The OTUku data frame may include an OTUku overhead and an OTUku payload.

The disclosure further provides a data mapping system for an OTUk according to claim 6.

The system may further include: a clock generation module, which is configured to generate a processing clock for the whole system, and to send the processing clock to other modules in the system.

The OTUk writing control module may be further configured to generate the writing control signal for the OTUk data and to write the OTUk data to the data storage FIFO module when the valid signal for the OTUk data is acquired and the data storage state of the data storage FIFO module is not full.

The OTUk reading control module may be further configured to output the reading control signal for the OTUk data according to the acquired OTUku frame header information when the data storage state of the data storage FIFO module is not null.

The OTUku data frame may include an OTUku overhead and an OTUku payload.

According to the data mapping method and the data mapping system for the OTUk provided by the disclosure, an OTUk frame is carried to an OTUku frame, namely, the OTUku frame serves as the carrier of the OTUk frame; and the optical ports in the OTN are interconnected by the OTUku frame, thereby avoiding clock recovery. That is to say, through the disclosure, the clock loss caused by the clock recovery is reduced, thereby increasing the number of optical ports interconnected, reducing the exceeding jitter caused by the interconnection of optical ports, and ensuring normal communications in the OTN.

### BRIEF DESCRIPTION OF THE DRAWINGS

Fig. 1 is a diagram showing a frame structure of an OTUk in the conventional art;
Fig. 2 is a diagram showing interconnections of optical ports in an ONT in the conventional art;
Fig. 3 is a diagram showing a structure of an OTUku frame in the disclosure;
Fig. 4 is a diagram showing a structure of a data mapping system for an OTUk of the disclosure; and
Fig. 5 is a flowchart of a data mapping method for an OTUk of the disclosure.

### DETAILED DESCRIPTION

The technical scheme of the disclosure is further explained below in detail by combining with the drawings and specific embodiments.

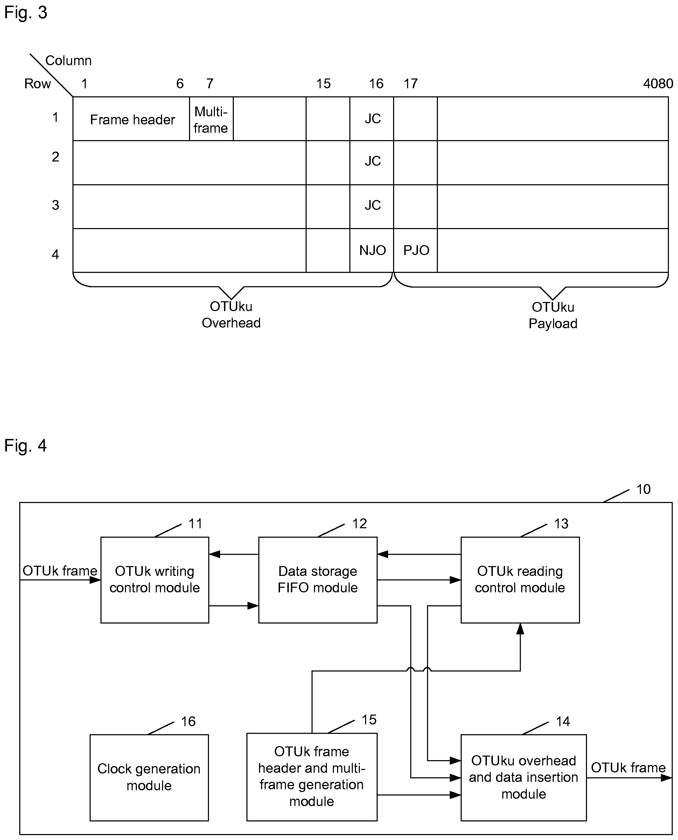

The disclosure provides an OTUk superframe (OTUku frame), by which an OTUk frame is born, namely, the OTUku frame serves as the carrier of the OTUk frame, and by which optical ports in an OTN are interconnected. With the structure shown in Fig. 3, the OTUku frame is in a signal format of 4 rows x 4080 columns and includes an OTUku overhead (which is in a signal format of 4 rows x 16 columns) and an OTUku payload (which is in a signal format of 4 rows x 4064 columns).

The disclosure provides a data mapping system for an OTUk, as shown in Fig. 4, which mainly includes: an OTUk writing control module 11, a data storage First Input First Output (FIFO) module 12, an OTUk reading control module 13, an OTUku overhead and data insertion module 14 and an OTUku frame header and multi-frame generation module 15, wherein
the OTUk writing control module 11 is configured to generate a writing control signal for OTUk data according to a valid signal for the OTUk data and a data storage state of the data storage FIFO module 12, and to write the OTUk data to the data storage FIFO module 12;
the data storage FIFO module 12 is configured to write and read the OTUk data according to an FIFO principle, and to provide the data storage state to the OTUk writing control module 11 and the OTUk reading control module 13;
the OTUk reading control module 13 is configured to output a reading control signal for the OTUk data according to OTUku frame header information provided by the OTUku frame header and multi-frame generation module 15 and the data storage state of the data storage FIFO module 12, to control the data storage FIFO module 12 to read and send the data to the OTUku overhead and data insertion module 14, to generate a mapping adjustment overhead from an OTUk to an OTUku, and to send the overhead to the OTUku overhead and data insertion module 14;
the OTUku frame header and multi-frame generation module 15 is configured to generate OTUku frame header and multi-frame information, to provide the OTUku frame header and multi-frame information to the OTUku overhead and data insertion module 14, and to provide the OTUku frame header information to the OTUk reading control module 13; and
the OTUku overhead and data insertion module 14 is configured to insert the data output by the data storage FIFO module 12, the mapping adjustment overhead output by the OTUk reading control module 13 and the OTUku frame header and multi-frame information generated by the OTUku frame header and multi-frame generation module 15 to a corresponding location of an OTUku frame, and to generate an OTUku data frame.

Furthermore, the system further includes a clock generation module 16, which is configured to generate a processing clock for the whole system, and to send the processing clock to other modules in the system.

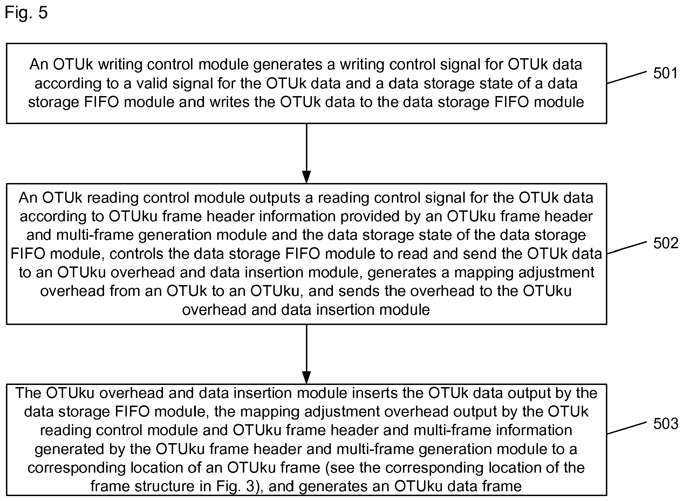

A data mapping method implemented by the system is shown in Fig. 5, which mainly includes:
Step 501: An OTUk writing control module generates a writing control signal for OTUk data according to a valid signal for the OTUk data and a data storage state of a data storage FIFO module and writes the OTUk data to the data storage FIFO module.

The OTUk writing control module inquires a data storage state of a data storage unit in the data storage FIFO module when acquiring the valid signal for the OTUk data; if the data storage state is not full, it indicates that the data can be written now, and then the OTUk writing control module generates a writing control signal for the OTUk data and writes the OTUk data to the data storage FIFO module; and if the data storage state is full, it indicates that the data cannot be written now, and then the OTUk writing control module can wait for a moment to inquire the data storage state again and can write the data if it is not full.

Step 502: An OTUk reading control module outputs a reading control signal for the OTUk data according to OTUku frame header information provided by an OTUku frame header and multi-frame generation module and the data storage state of the data storage FIFO module, controls the data storage FIFO module to read and send the OTUk data to an OTUku overhead and data insertion module, generates a mapping adjustment overhead from an OTUk to an OTUku, and sends the overhead to the OTUku overhead and data insertion module.

The OTUk reading control module inquires the data storage state of the data storage unit in the data storage FIFO module; if the data storage state is not null, it indicates that the data can be read now, and then the OTUk reading control module outputs a reading control signal for the OTUk data, and controls the data storage FIFO module to read and send the data to the OTUku overhead and data insertion module; and if the data storage state is null, it indicates that the data cannot be read now, and then the OTUk reading control module can wait for a moment to inquire the data storage state again and can read the data if it is not null.

In addition, the OTUk reading control module further needs to generate a mapping adjustment overhead from an OTUk to an OTUku, to send the overhead to the OTUku overhead and data insertion module. The mapping adjustment overhead is generated specifically as follows:
Referring to Fig. 3, according to the data storage state of the data storage unit, i.e., the level of FIFO storage data, when the FIFO storage data has reached 2/3 or a greater ratio of an FIFO depth (i.e., a maximum storage capacity of the data storage unit), negative justification is executed in order that FIFO data can be read at a Negative Justification Opportunity (NJO) byte location of the OTUku frame (i.e., at the 4th row and 16th column of the OTUku frame); and when the FIFO storage data is less than 1/3 of the FIFO depth, positive justification is executed in order that the FIFO data cannot be read at a Positive Justification Opportunity (PJO) byte location of the OTUku frame (i.e., at the 4th row and 17th column of the OTUku frame). The meaning of a Justification Control (JC) byte is shown in Table 1 below:

**Table 1**

| JC bit 7, 8 | NJO | PJO | Meaning |
|---|---|---|---|
| 00 | Justification byte | Data byte | No justification |
| 01 | Data byte | Data byte | Negative justification |
| 10 | Justification byte | Justification byte | Positive justification |
| 11 | Justification byte | Data byte | No justification |

As shown in Table 1, the first column represents bit 7 and bit 8 of the JC byte; the second column represents an NJO byte and the third column represents a PJO byte.

When bit 7 and bit 8 of the JC byte are 00, it means no justification, the NJO byte is a justification byte (i.e., invalid data), and the PJO byte is a data byte (i.e., valid data);
when bit 7 and bit 8 of the JC byte are 01, it means negative justification, namely, both the NJO byte and the PJO byte are valid data;
when bit 7 and bit 8 of the JC byte are 10, it means positive justification, namely, both the NJO byte and the PJO byte are invalid data; and
when bit 7 and bit 8 of the JC byte are 11, it means no justification, namely, the NJO byte is invalid data and the PJO byte is valid data.

Step 503: The OTUku overhead and data insertion module inserts the OTUk data output by the data storage FIFO module, the mapping adjustment overhead output by the OTUk reading control module and OTUku frame header and multi-frame information generated by the OTUku frame header and multi-frame generation module to a corresponding location of an OTUku frame (see the corresponding location of the frame structure in Fig. 3), and generates an OTUku data frame.

Through the disclosure, an OTUk frame is born to an OTUku frame, namely, the OTUku frame serves as the carrier of the OTUk frame, and the optical ports in the OTN are interconnected by the OTUku frame, thereby avoiding clock recovery. Namely, the clock loss caused by the clock recovery required for asynchronous mapping in the interconnection of optical ports in the OTN can be reduced, thereby reducing the jitter caused by the interconnection of the optical ports, increasing the OTN scale and realizing reliable communications among a large scale of OTNs.

What said above are only preferred embodiments of the disclosure, and not intended to limit the scope of protection of the disclosure.

## Claims

1. A data mapping method for an Optical channel Transport Unit-k, OTUK, wherein the method comprises:
generating (501), by an OTUk writing control module (11), a writing control signal for OTUk data according to a valid signal for the OTUk data and a data storage state, which is a level of storage data, of a data storage First Input First Output, FIFO, module (12), writing the OTUk data to the data storage FIFO module (12);
outputting (502), by an OTUk reading control module (13), a reading control signal for the OTUk data according to frame header information of an OTUk superframe, OTUku, provided by an OTUku frame header and multi-frame generation module (15) and the data storage state of the data storage FIFO module (12), controlling the data storage FIFO module (12) to read and send the OTUk data to an OTUku overhead and data insertion module (14), generating a mapping adjustment overhead from an OTUk to an OTUku, and sending the overhead to the OTUku overhead and data insertion module (14); wherein the generating the mapping adjustment overhead from the OTUk to the OTUku, comprises: executing negative justification when FIFO storage data is greater than or equal to 2/3 of an FIFO depth; or executing positive justification when the FIFO storage data is less than 1/3 of the FIFO depth; and
inserting (503), by the OTUku overhead and data insertion module (14), the OTUk data output by the data storage FIFO module (12), the mapping adjustment overhead output by the OTUk reading control module (13) and OTUku frame header and multi-frame information generated by the OTUku frame header and multi-frame generation module (15) to a corresponding location of the OTUku frame, and generating an OTUku data frame.

2. The method according to claim 1, further comprising: generating a processing clock for a whole system, and sending the processing clock to each module.

3. The method according to claim 1, further comprising:
when the valid signal for the OTUk data is acquired and the data storage state of the data storage FIFO module (12) is not full, generating, by the OTUk writing control module (11), the writing control signal for the OTUk data, and writing the OTUk data to the data storage FIFO module (12).

4. The method according to claim 1, further comprising:
outputting, by the OTUk reading control module (13), the reading control signal for the OTUk data according to the acquired OTUku frame header information when the data storage state of the data storage FIFO module (12) is not null.

5. The method according to any one of claims 1 to 4, wherein the OTUku data frame comprises an OTUku overhead and an OTUku payload.

6. A data mapping system for an Optical channel Transport Unit-k, OTUk, wherein the system comprises: an OTUk writing control module (11), a data storage FIFO module (12), an OTUk reading control module (13), an OTUku frame header and multi-frame generation module (15) and an OTUku overhead and data insertion module (14), wherein
the OTUk writing control module (11) is configured to generate a writing control signal for OTUk data according to a valid signal for the OTUk data and a data storage state, which a level of storage data, of the data storage FIFO module (12), and to write the OTUk data to the data storage FIFO module (12);
the data storage FIFO module (12) is configured to write and read the OTUk data according to an FIFO principle, and to provide the data storage state to the OTUk writing control module (11) and the OTUk reading control module (13);
the OTUk reading control module (13) is configured to output a reading control signal for the OTUk data according to OTUku frame header information provided by the OTUku frame header and multi-frame generation module (15) and the data storage state of the data storage FIFO module (12), to control the data storage FIFO module (12) to read and send the OTUk data to the OTUku overhead and data insertion module (14), to generate a mapping adjustment overhead from an OTUk to an OTUku, and to send the overhead to the OTUku overhead and data insertion module (14); wherein the to generate the mapping adjustment overhead from the OTUk to the OTUku, comprises: to execute negative justification when FIFO storage data is greater than or equal to 2/3 of an FIFO depth; or to execute positive justification when the FIFO storage data is less than 1/3 of the FIFO depth;
the OTUku frame header and multi-frame generation module (15) is configured to generate OTUku frame header and multi-frame information, to provide the OTUku frame header and multi-frame information to the OTUku overhead and data insertion module (14), and to provide the OTUku frame header information to the OTUk reading control module (13); and
the OTUku overhead and data insertion module (14) is configured to insert the OTUk data output by the data storage FIFO module (12), the mapping adjustment overhead output by the OTUk reading control module (13) and the OTUku frame header and multi-frame information generated by the OTUku frame header and multi-frame generation module (15) to a corresponding location of an OTUku frame, and to generate an OTUku data frame.

7. The system according to claim 6, further comprising: a clock generation module (16), which is configured to generate a processing clock for the whole system, and to send the processing clock to other modules in the system.

8. The system according to claim 6, wherein the OTUk writing control module (11) is further configured to generate the writing control signal for the OTUk data and to write the OTUk data to the data storage FIFO module (12) when the valid signal for the OTUk data is acquired and the data storage state of the data storage FIFO module (12) is not full.

9. The system according to claim 6, wherein the OTUk reading control module (13) is further configured to output the reading control signal for the OTUk data according to the acquired OTUku frame header information when the data storage state of the data storage FIFO module (12) is not null.

10. The system according to any one of claims 6 to 9, wherein the OTUku data frame comprises an OTUku overhead and an OTUku payload.

## Patentansprüche

1. Datenmappingverfahren für eine Strahlengangtransporteinheit-k (OTUk), wobei das Verfahren Folgendes umfasst:
Erzeugen (501) durch ein OTUk-Schreibsteuermodul (11) eines Schreibsteuersignals für OTUk-Daten gemäß einem gültigen Signal für die OTUk-Daten und eines Datenspeicherzustands, bei welchem es sich um ein Niveau von Speicherdaten eines First-Input-First-Output(FIFO)-Moduls (12) zur Datenspeicherung handelt, Schreiben der OTUk-Daten auf das FIFO-Modul (12) zur Datenspeicherung;
Ausgeben (502) durch ein OTUk-Lesesteuermodul (13) eines Lesesteuersignals für die OTUk-Daten gemäß Rahmenkopfzeileninformationen eines OTUk-Überrahmens (OTUku), die durch ein OTUku-Rahmenkopfzeilen-Multirahmen-Erzeugungsmodul (15) und den Datenspeicherzustand des FIFO-Moduls (12) zur Datenspeicherung bereitgestellt sind, Steuern des FIFO-Moduls (12) zur Datenspeicherung, um die OTUk-Daten zu lesen und diese an ein OTUku-Overhead-Dateneinfügemodul (14) zu senden, Erzeugen eines Mappinganpassungsoverhead aus der OTUk an den OTUku, und Senden des Overhead an das OTUku-Overhead-Dateneinfügemodul (14); wobei das Erzeugen des Mappinganpassungsoverhead aus der OTUk an den OTUku Folgendes umfasst: Ausführen eines negativen Pulsstopfens, wenn die FIFO-Speicherdaten gleich 2/3 einer FIFO-Tiefe oder größer sind; oder Ausführen eines positiven Pulsstopfens, wenn die FIFO-Daten weniger als 1/3 der FIFO-Tiefe sind; und
Einfügen (503) durch das OTUku-Overhead-Dateneinfügemodul (14) der OTUk-Daten, die von dem FIFO-Modul (12) zur Datenspeicherung ausgegeben werden, des Mappinganpassungsoverhead, der von dem OTUk-Lesesteuermodul (13) ausgegeben wird, und von OTUku-Rahmenkopfzeilen- und Multirahmen-Informationen, die durch das OTUku-Rahmenkopfzeilen-Multirahmen-Erzeugungsmodul (15) erzeugt werden, an einer entsprechenden Stelle des OTUku-Rahmens, und Erzeugen eines OTUku-Datenrahmens.

2. Verfahren nach Anspruch 1, ferner umfassend:
Erzeugen eines Verarbeitungstaktsignals für ein ganzes System und Senden des Verarbeitungstaktsignals an jedes Modul.

3. Verfahren nach Anspruch 1, ferner umfassend:
wenn das gültige Signal für die OTUk-Daten erfasst wird und der Datenspeicherzustand des FIFO-Moduls (12) zur Datenspeicherung nicht voll ist, Erzeugen durch das OTUk-Schreibsteuermodul (11) des Schreibsteuersignals für die OTUk-Daten und Schreiben der OTUk-Daten auf das FIFO-Modul (12) zur Datenspeicherung.

4. Verfahren nach Anspruch 1, ferner umfassend:
Ausgeben durch das OTUk-Lesesteuermodul (13) des Lesesteuersignals für die OTUk-Daten gemäß den erfassten OTUku-Rahmenkopfzeileninformationen, wenn der Datenspeicherzustand des FIFO-Moduls (12) zur Datenspeicherung nicht null ist.

5. Verfahren nach einem der Ansprüche 1 bis 4, wobei der OTUku-Datenrahmen einen OTUku-Overhead und OTUku-Nutzdaten umfasst.

6. Datenmappingsystem für eine Strahlengangtransporteinheit-k (OTUk), wobei das System Folgendes umfasst: ein OTUk-Schreibsteuermodul (11), ein FIFO-Modul (12) zur Datenspeicherung, ein OTUk-Lesesteuermodul (13), ein OTUku-Rahmenkopfzeilen-Multirahmen-Erzeugungsmodul (15) und ein OTUku-Overhead-Dateneinfügemodul (14), wobei
das OTUk-Schreibsteuermodul (11) dazu konfiguriert ist, ein Schreibsteuersignal für OTUk-Daten gemäß einem gültigen Signal für die OTUk-Daten und einem Datenspeicherzustand, bei welchem es sich um ein Niveau von Speicherdaten des FIFO-Moduls (12) zur Datenspeicherung handelt, zu erzeugen und die OTUk-Daten auf das FIFO-Modul (12) zur Datenspeicherung zu schreiben;
das FIFO-Modul (12) zur Datenspeicherung dazu konfiguriert ist, OTUk-Daten gemäß einem FIFO-Prinzip zu schreiben und zu lesen, und den Datenspeicherzustand dem OTUk-Schreibsteuermodul (11) und dem OTUk-Lesesteuermodul (13) bereitzustellen;
das OTUk-Lesesteuermodul (13) dazu konfiguriert ist, ein Lesesteuersignal für die OTUk-Daten gemäß OTUku-Rahmenkopfzeileninformationen, die durch das OTUku-Rahmenkopfzeilen-Multirahmen-Erzeugungsmodul (15) bereitgestellt sind, und dem Datenzustand des FIFO-Moduls (12) zur Datenspeicherung, auszugeben, um das FIFO-Modul (12) zur Datenspeicherung zu steuern, um die OTUk-Daten zu lesen und diese an das OTUku-Overhead-Dateneinfügemodul (14) zu senden, um einen Mappinganpassungsoverhead von einer OTUk an einen OTUku zu erzeugen und den Overhead an das OTUku-Overhead-Dateneinfügemodul (14) zu senden; wobei das zu Erzeugen des Mappinganpassungsoverhead von der OTUk an den OTUku Folgendes umfasst: ein negatives Pulsstopfen auszuführen, wenn die FIFO-Speicherdaten gleich 2/3 einer FIFO-Tiefe oder größer sind; oder ein positives Pulsstopfen auszuführen, wenn die FIFO-Speicherdaten kleiner als 1/3 der FIFO-Tiefe sind;
das OTUku-Rahmenkopfzeilen-Multirahmen-Erzeugungsmodul (15) dazu konfiguriert ist, die OTUku-Rahmenkopfzeilen- und Multirahmeninformationen zu erzeugen, um die OTUku-Rahmenkopfzeilen- und Multirahmeninformationen dem OTUku-Overhead-Dateneinfügemodul (14) bereitzustellen und die OTUku-Rahmenkopfzeileninformationen dem OTUk-Lesesteuermodul (13) bereitzustellen; und
das OTUku-Overhead-Dateneinfügemodul (14) dazu konfiguriert ist, die OTUk-Daten, die von dem FIFO-Modul (12) zur Datenspeicherung ausgegeben werden, den Mappinganpassungsoverhead, der von dem OTUk-Lesesteuermodul (13) ausgegeben wird, und die OTUku-Rahmenkopfzeilen- und Multirahmeninformationen, die von dem OTUku-Rahmenkopfzeilen-Multirahmen-Erzeugungsmodul (15) erzeugt werden, an einer entsprechenden Stelle des OTUku-Rahmens einzufügen und einen OTUku-Datenrahmen zu erzeugen.

7. System nach Anspruch 6, ferner umfassend: ein Taktsignalerzeugungsmodul (16), welches dazu konfiguriert ist, ein Verarbeitungstaktsignal für das ganze System zu erzeugen und das Verarbeitungstaktsignal an andere Module in dem System zu senden.

8. System nach Anspruch 6, wobei das OTUk-Schreibsteuermodul (11) ferner dazu konfiguriert ist, das Schreibsteuersignal für die OTUk-Daten zu erzeugen und die OTUk-Daten auf das FIFO-Modul (12) zur Datenspeicherung zu schreiben, wenn das gültige Signal für die OTUk-Daten erfasst wird und der Datenspeicherzustand des FIFO-Moduls (12) zur Datenspeicherung nicht voll ist.

9. System nach Anspruch 6, wobei das OTUk-Lesesteuermodul (13) ferner dazu konfiguriert ist, das Lesesteuersignal für die OTUk-Daten gemäß den erfassten OTUku-Rahmenkopfzeileninformationen auszugeben, wenn der Datenspeicherzustand des FIFO-Moduls (12) zur Datenspeicherung nicht null ist.

10. System nach einem der Ansprüche 6 bis 9, wobei der OTUku-Datenrahmen einen OTUku-Overhead und OTUku-Nutzdaten umfasst.

## Revendications

1. Procédé de mappage de données pour une unité-k de transport de canal optique, OTUk, dans lequel le procédé comprend :
la génération (501), par un module de commande d'écriture d'OTUk (11), d'un signal de commande d'écriture pour des données d'OTUk en fonction d'un signal valide pour les données d'OTUk et d'un état de stockage de données, qui est un niveau de données de stockage, d'un module premier entré premier sorti, FIFO, de stockage de données (12), l'écriture des données d'OTUk dans le module FIFO de stockage de données (12) ;
la fourniture en sortie (502), par un module de commande de lecture d'OTUk (13), d'un signal de commande de lecture pour les données d'OTUk en fonction d'informations d'en-tête de trame d'une super-trame d'OTUk, OTUku, fournies par un module de génération de trames multiples et d'en-tête de trame d'OTUku (15) et de l'état de stockage de données du module FIFO de stockage de données (12), la commande du module FIFO de stockage de données (12) pour lire et envoyer les données d'OTUk à un module d'insertion de données et de surdébit d'OTUku (14), la génération d'un surdébit d'ajustement de mappage d'une OTUk à une OTUku, et l'envoi du surdébit au module d'insertion de données et de surdébit d'OTUku (14) ; dans lequel la génération du surdébit d'ajustement de mappage de l'OTUk à l'OTUku comprend : l'exécution d'une justification négative quand des données de stockage FIFO sont supérieures ou égales à 2/3 d'une profondeur FIFO ; ou l'exécution d'une justification positive quand les données de stockage FIFO sont inférieures à 1/3 de la profondeur FIFO ; et
l'insertion (503), par le module d'insertion de données et de surdébit d'OTUku (14), des données d'OTUk fournies en sortie par le module FIFO de stockage de données (12), du surdébit d'ajustement de mappage fourni en sortie par le module de commande de lecture d'OTUk (13) et des informations de trames multiples et d'en-tête de trame d'OTUku générées par le module de génération de trames multiples et d'en-tête de trame d'OTUku (15) à un emplacement correspondant de la trame OTUku, et la génération d'une trame de données OTUku.

2. Procédé selon la revendication 1, comprenant en outre : la génération d'une horloge de traitement pour un système complet et l'envoi de l'horloge de traitement à chaque module.

3. Procédé selon la revendication 1, comprenant en outre :
quand le signal valide pour les données d'OTUk est acquis et l'état de stockage de données du module FIFO de stockage de données (12) n'est pas plein, la génération, par le module de commande d'écriture d'OTUk (11), du signal de commande d'écriture pour les données d'OTUk, et l'écriture des données OTUk au module FIFO de stockage de données (12).

4. Procédé selon la revendication 1, comprenant en outre :
la fourniture en sortie, par le module de commande de lecture d'OTUk (13), du signal de commande de lecture pour les données d'OTUk en fonction des informations d'en-tête de trame d'OTUku acquises quand l'état de stockage de données du module FIFO de stockage de données (12) n'est pas nul.

5. Procédé selon l'une quelconque des revendications 1 à 4, dans lequel la trame de données d'OTUku comprend un surdébit d'OTUku et une charge utile d'OTUku.

6. Système de mappage de données pour une unité-k de transport de canal optique, OTUk, dans lequel le système comprend : un module de commande d'écriture d'OTUk (11), un module FIFO de stockage de données (12), un module de commande de lecture d'OTUk (13), un module de génération de trames multiples et d'en-tête de trame d'OTUku (15) et un module d'insertion de données et de surdébit d'OTUku (14), dans lequel
le module de commande d'écriture d'OTUk (11) est configuré pour générer un signal de commande d'écriture pour des données d'OTUk en fonction d'un signal valide pour les données d'OTUk et d'un état de stockage de données, qui est un niveau de données de stockage, d'un module FIFO de stockage de données (12), et pour écrire les données d'OTUk dans le module FIFO de stockage de données (12) ;
le module FIFO de stockage de données (12) est configuré pour écrire et lire les données d'OTUk en fonction d'un principe FIFO et pour fournir l'état de stockage de données au module de commande d'écriture d'OTUk (11) et au module de commande de lecture d'OTUk (13) ;
le module de commande de lecture d'OTUk (13) est configuré pour fournir en sortie un signal de commande de lecture pour les données d'OTUk en fonction d'informations d'en-tête de trame d'OTUku fournies par le module de génération de trames multiples et d'en-tête de trame d'OTUku (15) et l'état de stockage de données du module FIFO de stockage de données (12), commander le module FIFO de stockage de données (12) pour lire et envoyer les données d'OTUk au module d'insertion de données et de surdébit d'OTUku (14), générer un surdébit d'ajustement de mappage d'une OTUk à une OTUku, et envoyer le surdébit au module d'insertion de données et de surdébit d'OTUku (14) ; dans lequel le fait de générer le surdébit d'ajustement de mappage de l'OTUk à l'OTUku comprend : le fait d'exécuter une justification négative quand des données de stockage FIFO sont supérieures ou égales à 2/3 d'une profondeur FIFO; ou exécuter une justification positive quand les données de stockage FIFO sont inférieures à 1/3 de la profondeur FIFO ;
le module de génération de trames multiples et d'en-tête de trame d'OTUku (15) est configuré pour générer des informations de trames multiples et d'en-tête de trame d'OTUku, fournir les informations de trames multiples et d'en-tête de trame d'OTUku au module d'insertion de données et de surdébit d'OTUku (14) et fournir les informations d'en-tête de trame d'OTUku au module de commande de lecture d'OTUk (13) ; et
le module d'insertion de données et de surdébit d'OTUku (14) est configuré pour insérer les données d'OTUk fournies en sortie par le module FIFO de stockage de données (12), le surdébit d'ajustement de mappage fourni en sortie par le module de commande de lecture d'OTUk (13) et les informations de trames multiples et d'en-tête de trame d'OTUku générées par le module de génération de trames multiples et d'en-tête de trame d'OTUku (15) à un emplacement correspondant d'une trame OTUku, et générer une trame de données OTUku.

7. Système selon la revendication 6, comprenant en outre : un module de génération d'horloge (16) qui est configuré pour générer une horloge de traitement pour le système complet et envoyer l'horloge de traitement à d'autres modules dans le système.

8. Système selon la revendication 6, dans lequel le module de commande d'écriture d'OTUk (11) est en outre configuré pour générer le signal de commande d'écriture pour les données d'OTUk et écrire les données d'OTUk dans le module FIFO de stockage de données (12) quand le signal valide pour les données d'OTUk est acquis et l'état de stockage de données du module FIFO de stockage de données (12) n'est pas plein.

9. Système selon la revendication 6, dans lequel le module de commande de lecture d'OTUk (13) est en outre configuré pour fournir en sortie le signal de commande de lecture pour les données d'OTUk en fonction des informations d'en-tête de trame d'OTUku acquises quand l'état de stockage de données du module FIFO de stockage de données (12) n'est pas nul.

10. Système selon l'une quelconque des revendications 6 à 9, dans lequel la trame de données d'OTUku comprend un surdébit d'OTUku et une charge utile d'OTUku.
